# EUROPEAN PATENT APPLICATION

(11) **EP 1 387 118 A2**
(43) Date of publication of application: **04.02.2004**
(21) Application number: 03015633.5
(22) Date of filing: 16.07.2003
(51) Int. Cl.: F16L 11/08, B29C 47/02

(54) **Hose with a wrapped layer**

(30) Priority: 31.07.2002 US 209511
(71) Applicant: EATON CORPORATION, Cleveland, Ohio 44114-2584 (US)
(72) Inventor: Ludwig, Kenneth, Perrysburg, Ohio 43551 (US); Malley, Jennifer, Toledo, Ohio 43614 (US); Walsh, Brian, Holland, Ohio 43528 (US); Zemanek, Scott, Bowling Green, Ohio 43402 (US)
(74) Representative: Wagner, Karl H., Dipl.-Ing.

(57) **Abstract**

The present invention relates to a hose that includes a tubular innermost portion, a reinforcing layer surrounding the innermost portion, and an outermost layer surrounding the reinforcing layer, where the innermost portion includes a wrapped layer. The innermost portion may be only the wrapped layer or may include an inner tube as well. The present invention also relates to a method of manufacturing hose with a wrapped layer. A film is wrapped around an inner tube or a mandrel, followed by the application of a reinforcing layer and an outermost layer.

## Description

The present invention relates to an improved hose for use in motor vehicles, and more particularly to a hose for use in the air-conditioning (AC) and refrigeration systems.

### BACKGROUND OF THE INVENTION

Multi-layer hoses are known to be used in the AC systems and refrigeration system in both stationary and mobile applications. An innermost portion is in direct contact with the fluid to be transported through the hose. Typically, an outermost layer is a protective covering. One or more layers located between the innermost and outermost layers provide desired reinforcement, strength, or other operational properties to the hose.

A primary consideration when selecting a material or a construction method for an AC hose is the permeability of the hose. Since AC efficiency over time is based in part on the retention of refrigerant, loss of the refrigerant by permeation through the hose should be avoided. In addition, the effect of refrigerants on the environment has lately come under scrutiny such that refrigerant releases should be minimized to the greatest extent possible.

Known materials for the innermost portion exhibit adequate resistant to permeation, yet require expensive manufacturing techniques to turn them into acceptable hose components. One of the most popular hose construction techniques involves extrusion of a material on to a mandrel. While extrusion provides quality hoses having an inner diameter of under ¾", the capital and operational costs associated with the purchase of an extrusion machine are considerable. The capital and operational costs are such that elimination of even a single extrusion apparatus provides significant cost saving in the manufacturing of hose. Furthermore, as the inner diameter of the hose increases beyond ¾", it is exceedingly difficult, if not impossible, to manufacture the permeation resistant innermost portion by extrusion. The absence of a permeation resistant layer in hoses over ¾" inner diameter is indicate of this problem with the prior art.

Accordingly, the inventors have recognized a need for a AC hose with a high resistance to permeation that can also be manufactured through the elimination of at least one expensive processing step.

### BRIEF DESCRIPTION OF THE DRAWINGS

In the drawings:
FIG. 1 shows a perspective view of a hose according to one aspect of the present invention.
FIG. 2 shows a perspective view of a hose according to another aspect of the present invention.

### DETAILED DESCRIPTION

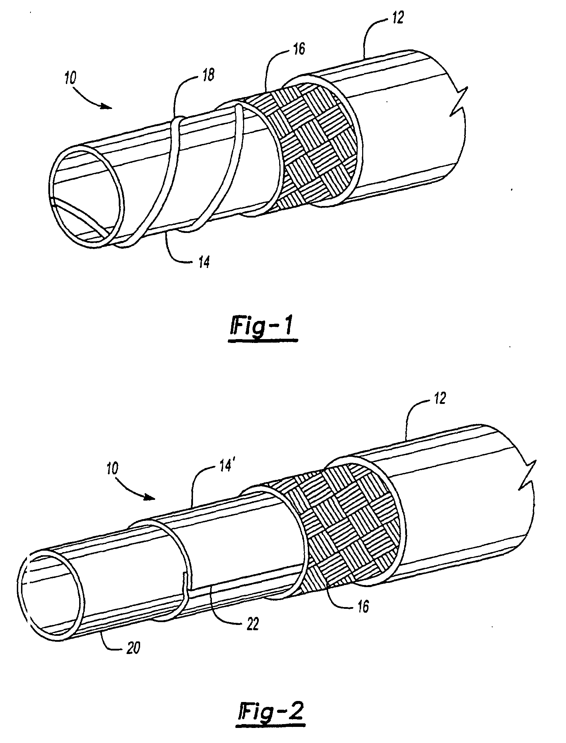

The present invention includes a hose with at least one wrapped layer. As seen in FIG. 1, in one aspect, a hose 10 includes an outermost layer 12 and a wrapped layer 14 that is the innermost portion of hose 10. This type of hose is called a veneer hose. Hose 10 may include a reinforcement layer 16 between outermost layer 12 and wrapped layer 14.

Wrapped layer 14 has a spiral format that results from the wrapping process. The spiral format has a seam 18 that forms a helix around the longitudinal axis of the hose. The material of the wrapped layer overlaps itself at seam 18. The overlap in the wrapped layer ensures a seam which is less susceptible to leaking. By using a wrapped layer as the innermost portion of the hose, an extrusion processing step and the associated apparatus may be eliminated.

In another aspect, as seen in FIG. 2, the innermost portion includes wrapped layer 14' as well as an inner tube 20, where the wrapped layer surrounds the inner tube. This type of hose is called a barrier hose. Wrapped layer 14' has a longitudinal format that results from the wrapping process. The longitudinal format has a seam 22 that is parallel to the longitudinal axis of the hose. The material of the wrapped layer overlaps itself at seam 22. The overlap in the wrapped layer ensures a seam which is less susceptible to leaking. By using a wrapped layer as one part of the innermost portion of the hose, an extrusion processing step and the associated apparatus may be eliminated.

In both the veneer and barrier hose aspects of this invention, additional components may be utilized, such as insulation, binding or adhesive layers. Such additional layers may be located between any two other layers.

The material of the outermost layer may have any composition that suitably protects the remaining layers of the hose from physical damage such as abrasion or cut-through. The outermost layer may be applied by any known manufacturing method, including extrusion. Preferably, the material of the outermost layer is an elastomeric material. Preferred elastomeric materials include those that have enhanced resistance to the environmental conditions present when the hose is in use. For example, in motor vehicle, elastomeric materials with enhanced resistance to heat and ozone are preferred.

Any known material may be used in the reinforcement layer including textile yarn, fabric, cord, plastic or metal wire and combinations thereof. Preferably, the reinforcement layer includes a braided textile yarn because the material provides a good strength to cost ratio, while also utilizing inexpensive braiding apparatuses.

In the barrier hose aspect of the invention, the material of the inner tube may be any elastomeric material. The purpose of the inner tube is to facilitate the attachment of coupling devices to the finished hose. Further, the inner tube may be constructed by any known process, including extrusion.

The material of the wrapped layer may have any composition. The material of the wrapped layer is resistant to refrigerant permeation, thus creating a permeation resistant layer in the hose. One suitable class of materials includes thermoplastics such as polyamides, polyethylene naphthalate (PEN), or ethylene vinyl alcohol polymer (EVOH). A polyamide such as nylon is the most preferred material for the wrapped layer.

Before manufacturing of the hose, the material of the wrapped layer is in the form of a film. Any width or thickness of film may be used and the film may be kept on a bobbin or other suitable device.

A binding layer may be utilized to help secure the wrapped layer. In the veneer hose aspect, the binding layer surrounds the wrapped layer. In the barrier hose aspect, the binding layer may either surround the inner tube or the wrapped layer. In either aspect, the binding layer is in contact with the wrapped layer. Any suitable material which serves to help secure the wrapped layer in position may be utilized as a binding layer. Typically, the binding layer is a material that, upon heating or curing, will bond to the wrapped layer. Preferably, a elastomeric material is used in the binding layer.

The hose of the present invention is manufactured as generally described below. In the veneer hose aspect, a conventional hose making mandrel is provided, around which the wrapped layer material is wrapped. At this point, the binding layer and/or adhesive may be applied. Next, a reinforcing layer is applied using a conventional apparatus. Finally, the outermost layer is applied over the reinforcing layer. After construction of the hose, it may cured through the application of heat or other curing conditions.

In the barrier hose aspect, a mandrel is provided, around which an inner tube is placed. Around the inner tube, the wrapping layer material is wrapped. The binding layer may be applied next. Then, a reinforcing layer and a outermost layer may be applied. Finally, the hose is cured.

Conventional processes and apparatus may be used to construct the barrier, binding, reinforcing and/or outermost layers. For example, a braider may be used to apply the reinforcing layer, while an extruder may be used to apply the outermost layer. A calendaring or skimming apparatus may be used to apply the binding layer. Construction of the wrapped layer may be accomplished using known processes and apparatus that have not previously been utilized for the wrapping of an innermost portion. Even though conventional processes and apparatuses are utilized, the elimination of even one extrusion step is cost effective. In addition, the elimination of extrusion allows the manufacture of hoses with a inner diameter of greater than 3/4" that include a permeation resistant layer.

Generally, the wrapping process may result in either of two formats for the wrapped layer: a spiral wrap or a longitudinal wrap, as seen respectively in FIG. 1 and 2. Of the two formats, the longitudinal wrap is preferred because the apparatuses and processes require less complex machinery and thus is least expensive to manufacture. The wrapped layer may include a butted seam, *i.e.,* no overlap, although an overlap seam is preferred because of increased resistance to permeation. In addition, conventional processes and apparatus may be used to apply adhesive to the seam and/or the exterior of the wrapped layer, before, during or after the wrapping step.

### Working Example

Hoses according to the present invention were constructed to determine their permeation characteristics. Two 16 mm barrier hoses were manufactured by wrapping nylon film around an inner tube. In the first hose, a 1 mil nylon film was utilized while in the second hose a 5 mil nylon film was utilized. The resultant hoses were 0.4 m in length and were filled with R-134a refrigerant to a density of approximately 0.6 g/cm³. The filled hoses were tested according to SAE Standard J2064; that is, stored for two weeks at a temperature of 80°C. The permeation rate for the 1 mil wrapped nylon hose was calculated to be 1.51 g/m/day, which corresponds to 4.087 kg/m²/year. The permeation rate for the 5 mil wrapped nylon hose was calculated to be 0.73 g/m/day, which corresponds to 1.976 kg/m²/year. Both of these permeation rates are well below the acceptable maximum rate of 9.7 kg/m²/year outlined in SAE Standard J2064.

The hoses were physically inspected for signs of blistering, particularly at the seams. Blistering is a symptom of pooling of refrigerant and could lead to hose failure. No signs of blistering were apparent on the test hoses.

In addition, the test hoses were subjected to an explosive decompression test to mimic catastrophic failure due to a vehicle accident. A hose passes the explosive decompression test through the absence of delamination. Both hoses did not show any signs of delamination after testing.

Hoses constructed with at least one wrapped layer achieve acceptable permeation rates at a significant reduction in manufacturing cost. The elimination of even one extruder from the hose manufacturing process makes the hose more economical because a large capital expenditure is eliminated, as are the associated machinery operating costs.

While the invention has been specifically described in connection with AC hoses in motor vehicles, it is to be understood that this is by way of illustration and not of limitation. The scope of the appended claims should be construed to encompass all kinds of hoses and their associated uses and as broadly as the prior art will permit including other mobile and stationary applications which utilize AC or refrigeration systems. In addition, three and four layer hoses have been specifically described, however, the scope of the appended claims should be construed to encompass hoses with 5 or more layers with the type and order of layers in those hoses

## Claims

1. An article of manufacture, comprising:
a tubular innermost portion,
at least one reinforcing layer surrounding said innermost portion, and
an outermost layer surrounding said reinforcing layer,
wherein said innermost portion comprises a wrapped layer.

2. The article of claim 1, wherein the innermost portion consists of said wrapped layer.

3. The article of claim 1, wherein the innermost portion comprises said wrapped layer surrounding an inner tube.

4. The article of claim 1, wherein said wrapped layer has a longitudinal format with an overlap seam.

5. The article of claim 1, wherein said wrapped layer has a spiral format with an overlap seam.

6. The article of claim 1, wherein said wrapped layer comprises a nylon film.

7. The article of claim 1, further comprising a binding layer in contact with said wrapped layer.

8. The article of claim 1, wherein said reinforcing layer includes a braided textile yarn or metal wire.

9. A method of manufacturing a hose, comprising:
wrapping a layer of film around an article selected from the group consisting of a mandrel and an inner tube;
surrounding said layer of film with a reinforcing layer, and
surrounding said reinforcing layer with an outermost layer.

10. The method of claim 9, wherein said film is a nylon film.

11. The method of claim 9, further comprising applying a binding layer in contact with said layer of film.

12. The method of claim 9, wherein said surrounding said layer of film step includes:
braiding a textile yarn around said layer of film.

13. The method of claim 9, wherein said surrounding said reinforcing step includes:
extruding an elastomeric material around said reinforcing layer.

14. The method of claim 9, further comprising, prior to said wrapping step, extruding said inner tube.

15. The method of claim 9, wherein said wrapping step consists of wrapping said layer of film around said mandrel.

16. The method of claim 9, wherein said wrapping step comprises wrapping said layer of film around said inner tube.

17. The method of claim 9, further comprising curing said hose.

18. A method of manufacturing a hose, comprising:
wrapping a layer of thermoplastic material around an article selected from a group consisting of a mandrel and an inner tube;
braiding a reinforcing material around said elastomeric material;
extruding an elastomeric material around said reinforcing material

19. The method of claim 18, wherein the thermoplastic material is a nylon.

20. The method of claim 18, wherein the reinforcing material is a textile yarn or a metal wire.
